Europäisches Patentamt

European Patent Office

Office européen des brevets

(19)

(11) Veröffentlichungsnummer: **0 328 739**
**A2**

## (12) EUROPÄISCHE PATENTANMELDUNG

(21) Anmeldenummer: **88117722.4**

(22) Anmeldetag: **25.10.88**

(51) Int. Cl.⁴: **G11B 5/02 , G11B 5/86**

(30) Priorität: **16.02.88 DE 3804800**

(43) Veröffentlichungstag der Anmeldung:
**23.08.89 Patentblatt 89/34**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Stacho, Reinhard c/o GRUNDIG**
**E.M.V.**
**Max Grundig holländ. Stiftung & Co KG**
**Kurgartenstrasse 37 D-8510 Fürth/Bay(DE)**

(54) **Verfahren zur überlagerten magnetischen Aufzeichnung von Audiosignalen und Anordnung zur Durchführung des Verfahrens.**

(57) Durch das neue Verfahren soll erreicht werden, daß der Aufzeichnungsvorgang für ein Audiosignal, das einem bereits aufgezeichneten Audiosignal zu überlagern ist, Weitgehend automatisch erfolgt.

Hierzu wird während des zweiten Aufzeichnungsvorganges der Aufnahmemagnetkopf automatisch nur in Zeitintervallen aktiviert, in denen ein bestimmter Mindestsignalpegel für das überlagert aufzuzeichnende Audiosignal vorhanden ist.

Vertonung bzw. Nachvertonung von Filmen, insbesondere auch Videoaufzeichnungen

EP 0 328 739 A2

## VERFAHREN ZUR ÜBERLAGERTEN MAGNETISCHEN AUFZEICHNUNG VON AUDIOSIGNALEN UND ANORDNUNG ZUR DURCHFÜHRUNG DES VERFAHRENS

Die erfindung betrifft ein Verfahren der im Oberbegriff des Anspruchs 1 angegebenen Art zur überlagerten magnetischen Aufzeichnung von Audiosignalen auf einem vorzugweise bandformigen Aufzeichnungsträger sowie eine Anordnung gemäß dem Oberbegriff des Anspruchs 2 zur Durchführung des betreffenden Verfahrens.

Verfahren zur überlagerten Aufzeichnung von Audiosignalen finden zum Beispiel bei der Vertonung von Filmen, insbesondere auch Videoaufzeichnungen, Anwendung. Häufig besteht das Bedürfnis, bereits gespeicherte Tonaufzeichnungen nachträglich zu übersprechen, ohne dabei die bereits bestehende Aufzeichnung vollkommen zu löschen. So könnte zum Bespiel in einem ersten Aufzeichnungsvorgang eine geeignete Begleitmusik und in einem zweiten Aufzeichnungsvorgang ein zusätzlich gesprochener Kommentar aufgezeichnet werden. Die Begleitmusik erscheint dann bei der fertigen Aufnahme nur noch mit gedämpfter Amplitude als sogenannte Hintergrundmusik.

Eine Einrichtung zur Durchführung eines solchen Verfahrens ist aus der deutschen Offenlegungsschrift 30 08 024 bekannt. Bei dieser Einrichtung wird in einem ersten Aufzeichnungsvorgang durch geeignete Ansteuerung eines Lösch- und eines Aufnahmemagnetkopfes ein erstes Audiosignal gespeichert. In einem zweiten Aufzeichnungsvorgang wird dann ein auswählbarer Teil des gespeicherten ersten Audiosignals durch ein zweites Audiosignal bei abgeschaltetem bzw. nicht voll angesteuertem Löschkopf und aktiviertem Aufnahmemagnetkopf so überschrieben, daß das zuerst aufgezeichnete Audiosignal mit gedämpfter Amplitude erhalten bleibt. Zur Steuerung des Aufzeichnungsvorganges muß der Bandtransport zu den jeweils richtigen Zeitpunkten manuell gestartet und unterbrochen werden. Zur Abschaltung des Löschkopfes bzw. zur Abschwächung des den Löschkopf versorgenden HF-Signals und damit zur Verminderung der Löschwirkung ist ein manuell einstellbarer Spannungsteiler vorgesehen, über den der Benutzer auch den Aussteuerungsgrad der überlagerten Aufzeichnung einstellt. Der Grad der gewählten Aussteuerung bestimmt somit auch gleichzeitig die Dämpfung der bereits vorhandenen ersten Aufzeichnung.

Das bekannte Verfahren bzw. die bekannte Einrichtung hat jedoch, insbesondere auch im Hinblick auf die Vertonung von Filmen und Videoaufzeichnungen, noch erhebliche Nachteile. So muß sich der Benutzer zum Beispiel beim Aufsprechen eines zusätzlichen Kommentars zu stark auf die für die Durchführung der Aufzeichnung erforderlichen manuellen Tätigkeiten, wie Aussteuerung, Start, Stop, Ein- und Ausblenden des aufzuzeichnenden Signals, konzentrieren. Dies hat häufig zur Folge, daß nach dem Start des Aufzeichnungsvorganges zu spät mit dem Sprechen des Kommentars begonnen wird oder daß nach Beendigung des Kommentars der richtige Zeitpunkt zum Abbrechen des Aufzeichnungsvorganges versäumt wird. Hierdurch entstehen ungewünschte Lücken in der Aufnahme, in denen das zuerst aufgezeichnete Audiosignal schon oder noch gedämpft ist, obwohl das zweite, zu überlagernde Audiosignal noch gar nicht bzw. nicht mehr vorhanden ist.

Der Erfindung liegt die Aufgabe zugrunde, ein Verfahren der im Oberbegriff des Anspruchs 1 angegebenen Art sowie eine Anordnung zur Durchführung des Verfahrens so auszubilden, daß die Steuerung des Aufzeichnungsvorganges, insbesondere für das zu überlagernde Audiosignal, weitgehend automatisch abläuft.

Diese Aufgabe wird gemäß der Erfindung durch die im Kennzeichen des Anspruchs 1 bzw. des Anspruchs 2 angegebenen Maßnahmen gelöst. Vorteilhafte Weiterbildungen und bevorzugte Ausführungsbeispiele der Erfindung, insbesondere für eine Anordnung zur Durchführung des Verfahrens, sind in den Unteransprüchen gekennzeichnet.

Der Vorteil des Verfahrens gemäß der Erfindung besteht vor allem darin, daß sich der Anwender bei der Aufzeichnung eines einem ersten Audiosignal zu überlagernden zweiten Audiosignals wesentlich mehr auf den Gegenstand der Aufzeichnung konzentrieren kann, als dies bei dem bekannten Verfahren der Fall ist, bei dem er sehr stark durch die überwachung des Aufzeichnungsvorganges selbst abgelenkt wird.

Bei dem Verfahren gemäß der Erfindung wird der Aufnahmemagnetkopf während des zweiten Aufzeichnungsvorgangs nur in Zeitintervallen aktiviert, in denen ein bestimmter Mindestpegel für das überlagert aufzuzeichnende Audiosignal vorhanden ist. Es kann somit in besonders einfacher Weise ein Videofilm, der z.B. bereits mit Musik untermalt ist, zusätzlich mit einem gesprochenen Kommentar nachvertont werden. Der Sprecher braucht hierzu nur zu gegebenen Zeitpunkten während des Betrachtens der Videoaufzeichnung den gewünschten Kommentar in ein Mikrofon zu sprechen. Da der Aufnahmemagnetkopf nur bei Vorhandensein eines ausreichend lauten Sprachsignals aktiviert wird, wird automatisch auch nur in diesen Zeitintervallen die bereits bestehende Musikaufzeichnung "angelöscht" und damit gedämpft. Manuell durchzuführende Steuerungen, insbesondere Aussteuerungs-, Start-, Stop-, Ein- und Ausblendvorgänge, sind nicht mehr erforderlich.

Im folgenden ist ein Ausführungsbeispiel für eine Anordnung zur Durchführung des Verfahrens gemäß der Erfindung anhand einer Zeichnung näher erläutert.

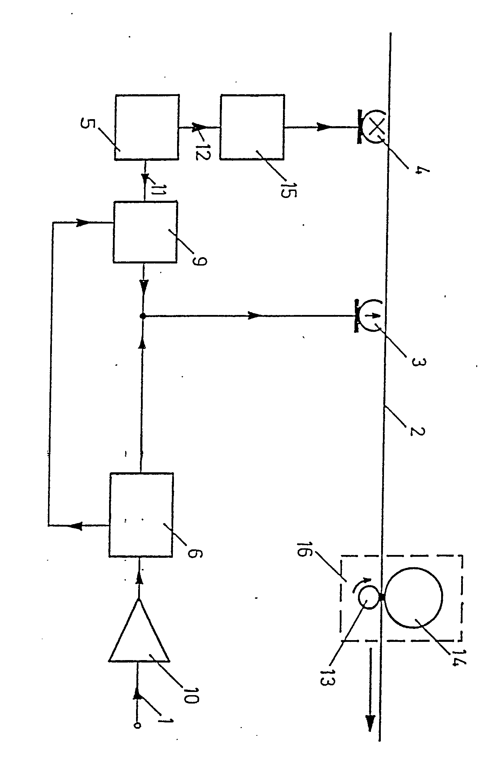

Die Figur zeigt ein Prinzipschaltbild für eine Aufzeichnungsanordnung gemäß der Erfindung. Die dargestellte Anordnung enthält unter anderem die für eine magnetische Aufzeichnung grundsätzlich erforderlichen Einrichtungen, insbesondere eine Steuer- und Antriebsvorrichtung 13, 14, 16 für einen Aufzeichnungsträger 2, einen Aufnahmemagnetkopf 3, einen Löschkopf 4 sowie einen HF-Generator 5 zur Erzeugung eines Vormagnetisierungssignals 11 für den Aufnahmemagnetkopf 3 und eines Löschsignals 12 für den Löschkopf 4. Die Antriebsvorrichtung ist für einen bandförmigen Aufzeichnungsträger ausgelegt und besteht wie üblich aus einer Kapstanwelle 13 und einer Andruckrolle 14. Das über den Aufnahmemagnetkopf 3 aufzuzeichnende Audiosignal 1 wird über einen Aufsprechverstärker 10 zugeführt, der vorzugsweise auch eine geeignete Entzerrung des aufzuzeichnenden Signals vornimmt.

Die weitere Beschreibung bezieht sich speziell auf die Aufzeichnung des Audiosignals, das einem bereits aufgezeichneten Signal überlagert werden soll. Für diesen Aufzeichnungsvorgang ist die Aktivierung des Löschkopfes 4 über eine Schalteinrichtung 15 abschaltbar.

Zur Aufzeichnung eines zu überlagernden Audiosignals 1 enthält die dargestellte Aufzeichnungsanordnung gemäß der Erfindung einen Signalpegeldetektor 6, der den Signalpegel des aufzuzeichnenden Signals überwacht, und der den Aufnahmemagnetkopf 3 über eine Steuereinrichtung 9 nur bei einem vorhandenen Mindestsignalpegel aktiviert.

In vorteilhafter Weise enthält die Steuereinrichtung 9 einen elektronisch steuerbaren Steller, der in Abhängigkeit von der Amplitude des über den Signalpegeldetektor 6 detektierten Signalpegels die Amplitude des Vormagnetisierungssignals 11 regelt, die wiederum den Grad der Aktivierung für den Aufnahmemagnetkopf 3 bestimmt. Damit ist es möglich durch die gewählte Sprechlautstärke, z.B. beim Aufsprechen eines Kommentars, direkt den Grad der Dämpfung für die Erstaufzeichnung (z.B. Musik) sowie den Grad der Aussteuerung für die Zweitaufzeichnung zu bestimmen.

Eine besonders vorteilhafte Ausgestaltung des Erfindungsgegenstandes besteht noch darin, daß die Aktivierung des Aufnahmemagnetkopfes 3 beim Auftreten eines Mindestsignalpegels mit einer ersten, sehr kleinen Zeitkonstanten und die Inaktivierung des Aufnahmemagnetkopfes beim Ausbleiben eines Mindestsignalpegels mit einer zweiten, im Vergleich zur ersten, größeren Zeitkonstanten erfolgt. Hierdurch wird erreicht, daß einerseits Teile zu Beginn des aufzuzeichnenden Signals nicht unterdrückt werden, und daß andererseits, z.B. bei einer Sprechpause, die Dämpfung der Erstaufzeichnung nicht schlagartig, sondern langsam aufgehoben wird.

## Ansprüche

1. Verfahren zur überlagerten magnetischen Aufzeichnung von Audiosignalen auf einem vorzugsweise bandförmigen Aufzeichnungsträger, bei dem in einem ersten Aufzeichnungsvorgang durch Ansteuerung eines Löschkopfes und Ansteuerung eines Aufnahmemagnetkopfes ein erstes Audiosignal gespeichert wird, und bei dem in einem zweiten Aufzeichnungsvorgang ein auswählbarer Teil des gespeicherten ersten Audiosignals durch ein zweites Audiosignal bei abgeschaltetem Löschkopf und aktiviertem Aufnahmemagnetkopf so überschrieben wird, daß das zuerst aufgezeichnete Audiosignal mit gedämpfter Amplitude erhalten bleibt, **dadurch gekennzeichnet,** daß während des zweiten Aufzeichnungsvorganges der Aufnahmemagnetkopf automatisch nur in Zeitintervallen aktiviert wird, in denen ein bestimmter Mindestsignalpegel für das überlagert aufzuzeichnende Audiosignal vorhanden ist.

2. Anordnung zur Durchführung des Verfahrens nach Anspruch 1 mit einer Antriebseinrichtung (13, 14) für einen vorzugsweise bandförmigen Aufzeichnungsträger (2), mit einem Aufnahmemagnetkopf (3) und einem Löschkopf (4), sowie mit wenigstens einem HF-Generator (5) zur Erzeugung eines Vormagnetisierungssignals (11) für die Aktivierung des Aufnahmemagnetkopfes (3) und eines Löschsignals (12) für die Aktivierung des Löschkopfes (4), wobei für den Aufzeichnungsvorgang für das zu überlagernde Audiosignal die Aktivierung des Löschkopfes (4) über eine Schalteinrichtung (15) abschaltbar ist, **dadurch gekennzeichnet,** daß ein Signalpegeldetektor (6) vorgesehen ist, der während des Aufzeichnungsvorganges für das zu überlagernde Audiosignal (1) den Signalpegel dieses Signals überwacht, und der den Aufnahmemagnetkopf (3) über eine Steuereinrichtung (9) nur bei einem vorhandenen Mindestsignalpegel für das überwachte Signal aktiviert.

3. Anordnung nach Anspruch 2, **dadurch gekennzeichnet,** daß die Steuereinrichtung (9) einen elektronisch steuerbaren Steller enthält, der in Abhängigkeit von der Amplitude des über den Signalpegeldetektor (6) detektierten Signalpegels die Amplitude des dem Aufnahmemagnetkopf (3) zuzuführenden Vormagnetisierungssignals regelt.

4. Anordnung nach Anspruch 2 oder 3, **dadurch gekennzeichnet,** daß die Aktivierung des Aufnahmemagnetkopfes (3) beim Auftreten eines Mindestsignalpegels mit einer ersten, sehr kleinen Zeitkonstanten und die Inaktivierung des Aufnahmemagnetkopfes beim Ausbleiben eines Mindestsignalpegels mit einer zweiten, im Vergleich zur ersten grösseren Zeitkonstanten erfolgt.